# EUROPÄISCHE PATENTSCHRIFT

(11) **EP 2 381 235 B1**
(45) Veröffentlichungstag und Bekanntmachung des Hinweises auf die Patenterteilung: **15.01.2020**
(21) Anmeldenummer: 11162307.0
(22) Anmeldetag: 13.04.2011
(51) Int. Cl.: G01M 13/04, G01L 1/12, F16C 19/52, F16C 33/30, G01L 5/00

(54) **Verfahren und Vorrichtung zur Erkennung von Fehlern in den Laufflächen der Lagerschalen und in den Wälzkörpern von Keramik-Hybrid-Lagern**
Method and device for recognising defects in the bearing surfaces of bearing shells and the roller bodies of ceramic-hybrid bearings
Procédé et dispositif de reconnaissance d'anomalies dans les surfaces de roulement des coussinets et dans les éléments roulants de paliers hybrides-céramiques

(30) Priorität: 23.04.2010 DE 102010018236
(43) Veröffentlichungstag der Anmeldung: 26.10.2011
(73) Patentinhaber: Rolls-Royce Deutschland Ltd & Co KG, 15827 Blankenfelde-Mahlow (DE)
(72) Erfinder: Lück, Rudolf, 15827 Blankenfelde-Mahlow (DE); Schoenicke, Anika, 15827 Blankenfelde-Mahlow (DE)

(56) Entgegenhaltungen:
- EP-A1- 1 550 813
- DE-A1- 10 136 438
- DE-A1-102007 043 392
- JP-A- 2004 361 259

## Beschreibung

Die Erfindung bezieht sich auf ein Verfahren und auf eine Vorrichtung zur Erkennung von Fehlern in den Laufflächen der Lagerschalen und in den Keramikwälzkörpern von Keramik-Hybrid-Lagern.

Bei Keramik-Hybrid-Lagern handelt es sich um Lager, deren Wälzkörper, insbesondere Kugeln, aus einer Keramik gefertigt sind, und deren Lagerschalen, d. h. der Innen- und der Außenring, aus metallischen Werkstoffen, insbesondere aus Stahl, bestehen. Die Keramik-Hybrid-Lager haben Vorteile gegenüber den bisher üblichen Lagern mit Wälzkörpern aus metallischen Werkstoffen, wie z. B. eine geringere Dichte bei einem höheren E-Modul der Keramikwälzkörper. Da bei dieser Art von Lagern die Verschleißcharakteristik noch weitgehend unbekannt ist, ist es hier besonders wichtig, beginnende Schäden so früh wie möglich zu erkennen.

Es ist allgemein bekannt, bei in ein Flugtriebwerk eingebauten Keramik-Hybrid-Lagern die Vibrationen des eingebauten Lagers über eine starre Strebe auf einen im Gehäuse fest eingebauten Vibrationssensor zu übertragen, vom Sensor aufzunehmen und in einer elektronischen Auswerteeinrichtung auszuwerten. Über die starre Strebe ist aber eine Dämpfung und Verfälschung der höheren Frequenzen vom Keramik-Hybrid-Lager bis zum Vibrationssensor bzw. -aufnehmer zu erwarten.

Aus US 2005/0066741 A1 ist ein Verfahren zum Bruchtest bei keramischen Lagerkugeln bekannt. Dabei wird ein Verfahren zur Bestimmung der Bruchzähigkeit der Keramikkugeln eingesetzt. Dazu wird eine einzelne Keramikkugel in einer mechanischen Prüfvorrichtung fixiert und mechanisch belastet. Über ein optisches System wird eine etwaige Rissausbreitung gemessen und ausgewertet.

Aus US 7,370,537 B2 ist ein Verfahren zum akustischen Messen einer einzelnen Keramikkugel bekannt. Dabei wird die Keramikkugel in einer der obigen Prüfvorrichtung entsprechenden Prüfvorrichtung mechanisch belastet. Mittels eines Mikrofons können Fehlstellen in der Keramikkugel aufgrund der bekannten Bruchzähigkeit des Keramikmaterials ermittelt werden.

Aus JP 2004 361259, EP 1 550 813, DE 10 2007 043392 und DE 101 36 438 sind Vorrichtungen bekannt, die zur Erkennung von Fehlern in den Laufflächen der Lagerschalen mittels der inversen Magnetostriktion konfiguriert sind.

Nachteilig bei diesen beiden bekannten Verfahren ist, dass die Festigkeit von Keramikkugeln nur geprüft werden kann, bevor die Keramikkugeln in ein Keramik-Hybrid-Lager eingebaut werden. Eine kontinuierliche Überprüfung der in ein Keramik-Hybrid-Lager eingebauten Keramikkugeln sowie deren Lagerschalen ist im Betrieb nicht möglich.

Der Erfindung liegt die Aufgabe zugrunde, ein Verfahren und eine Vorrichtung zur Erkennung von Fehlern der in ein Keramik-Hybrid-Lager eingebauten Keramikwälzkörper, insbesondere Keramikkugeln, und deren Lagerschalen zu schaffen, ohne dass Verfälschungen der Messwerte der eingebauten Keramik-Hybrid-Lager auftreten.

Zur Lösung dieser Aufgabe sieht die Erfindung vor, dass die äußere ferromagnetische Lagerschale des Keramik-Hybrid-Lagers mindestens in einem Teilbereich magnetisch kodiert wird und die magnetische Kodierung der Lagerschale als ein Generator für die Prüfung der Lagerschalen und deren Keramikwälzkörper mittels der inversen Magnetostriktion verwendet wird. Damit wird die Erkennung von Fehlern und die Sicherheit gegen diese Fehler in den Lagerschalen und deren Keramikwälzkörpern bei der Anwendung der eingebauten Keramik-Hybrid-Lager deutlich erhöht.

Die Erfindung ermöglicht, Fehler in den Laufflächen der Lagerschalen und der in diesen umlaufenden Keramikwälzkörper von Keramik-Hybrid-Lagern während der Zeit des Betriebes kontinuierlich zu überprüfen. Dazu müssen der Außenring oder auch der Innenring des Lagers aus einem ferromagnetischem Werkstoff, wie Eisen, Nickel, Kobalt und deren Legierungen, gefertigt sein. Der Druckverlauf, den der Keramikwälzkörper in Form von Kugeln, Rollen u. dgl. auf die Lagerflächen der Lagerschalen ausübt, wird über einen Teil des Umfanges der Lagerschale oder den gesamten Umfang der Lagerschale mittels der Methode der inversen Magnetostriktion gemessen. Der Druckverlauf wird bei einem eingebauten Keramik-Hybrid-Lager in bestimmten Zeitabständen oder fortlaufend während des Betriebs des Lagers regelmäßig überprüft. Es erfolgt eine Vergleich der Drucksignatur des gemessenen Lagers mit bekannten Drucksignaturen von geschädigten und ungeschädigten Lagern.

Wenn vorzugsweise nur jeweils einzelne Wälzkörper bezüglich der Druckverläufe überwacht bzw. geprüft werden, muss die Länge des sensitiven, gemessenen Teilbereiches dem Umfang eines Wälzkörpers bzw. einer Keramikkugel des Keramik-Hybrid-Lagers entsprechen, um jeweils möglichst selektiv einen oder maximal zwei Wälzkörper auf einmal zu erfassen. Eine weitere Umsetzungsmöglichkeit besteht darin, die gesamte Lauffläche, bzw. den vollen Umfang des Lagerinnen- oder des Lageraußenrings bezüglich des Druckverlaufes über die inverse Magnetostriktion zu messen bzw. zu prüfen.

Durch den Druck des keramischen Wälzkörpers, insbesondere der Keramikkugel, auf einen Teilbereich der Lauffläche der ferro-magnetischen Lagerschale, kommt es auf Grund des inversen magnetostriktiven Effektes zu einer Veränderung der Vorzugsrichtung des magnetischen Flusses in der Lagerschale. Die Veränderung der Vorzugsrichtung des magnetischen Flusses in der Lagerschale führt auch zu einer Änderung des magnetischen Feldes außerhalb der Lagerschale, welches mit verschiedenen bekannten Verfahren der Magnetfeldmessung ausgelesen werden kann.

Um die Änderung der magnetischen Vorzugsrichtung messen zu können, muss ein magnetisches Feld zur Verfügung stehen, das einen magnetischen Fluss in der Lagerschale hervorruft. Magnetische Strukturen sind direkt in die Lagerschale eingebracht (Magnetisierung). Um Störungen durch äußere Magnetfelder zu kompensieren, werden bei den in die Lagerschalen eingebrachten Magnetisierungen zwei oder mehrere, räumlich getrennte, gegeneinander laufende Magnetfelder verwendet. Die sich im Lager aufgrund des Druckverlaufes auf die Lagerschale ergebenden Felder werden gemessen, und dann wird aus der Differenz der beiden Felder der endgültige Druckverlauf berechnet. Durch die Differenzbildung fallen von außen eingebrachte magnetische Störungen weitgehend aus.

Durch den Druck auf die Lagerschalen ändern sich die Ausrichtungen der "Weiss'sehen Bezirke" in den Lagerschalen. Dadurch ändert sich die magnetische Vorzugsrichtung in dem ferromagnetischen Werkstoff, was auch zu einer messbaren räumlichen Veränderung des Feldes außerhalb der Lagerschalen führt.

Je nach der Größe der zu messenden Magnetfelder werden Hallsensoren und Feldplatten (0,5µT - 5T), magnetoresistive Sensoren (0,5µt - 5mT), Fluxgate-Sensoren (lOpT - 100µT) oder SQUID's (1fT - 10nT) verwendet.

Es wird hier davon ausgegangen, dass Fluxgates sowohl die passende Empfindlichkeit als auch die benötigte Robustheit der messenden Elemente aufweisen. Es kann mit drei orthogonal ausgerichteten Sensoren der Verlauf des magnetischen Feldes im Raum bestimmt werden. Triaxiale Fluxgate-Sensoren werden als Einheit auf dem Markt angeboten, z. B. Stefan Meyer Instruments FLC3-70.

Sollten sich nun kritische Beschädigungen in den Keramikwälzkörpern oder den Laufflächen der Lagerschalen ausbilden, verändert sich auch der räumliche und zeitliche Druckverlauf auf die zu messende Lagerschale. Dadurch ändert sich der magnetische Flussverlauf in der Lagerschale, wodurch sich auch außerhalb der Lagerschale die räumliche Ausrichtung der Feldstärke des magnetischen Feldes ändert. Ein Vergleich der Signatur der magnetischen Feldstärken vor und nach einem Vorfall kann somit Aufschluss über mögliche Fehler in den Keramikwälzkörpern bzw. Keramikkugeln oder den Laufflächen der Lagerschalen liefern.

Wenn der gesamte Umfangsbereich der äußeren oder inneren Lagerschale als messendes Element ausgelegt ist, können mit diesem Verfahren ebenfalls Beschädigungen an dem gesamten Umfangsbereichen der Lagerringe bzw. Lagerschalen erkannt werden.

Die Erfindung bezieht sich ferner auf eine Vorrichtung zur Erkennung von Fehlern in den Laufflächen von Lagerschalen und in den Wälzkörpern von Keramik-Hybrid-Lagern gemäß dem erfindungsgemäßen Verfahren.

Die Erfindung bezieht sich schließlich auch auf die Verwendung der inversen Magnetostriktion zur Ermittlung von Druckverläufen in den Lagerschalen und Keramikwälzkörpern eines Keramik-Hybrid-Lagers zur Lagerung der Hauptantriebswelle eines Flugtriebwerkes.

Ein kontinuierliches, berührungsloses Überprüfen der Keramikwälzkörper und der Lagerringe wird mit der Erfindung gegeben. Defekte Keramikwälzkörper oder -kugeln oder deren Lagerringe können somit schnell erkannt werden.

Die Erfindung ist nachfolgend anhand zweier verschiedener Verfahren zur Erkennung von Fehlern in den Laufflächen der Lagerschalen und in den Keramikwälzkörpern bzw. - kugeln von Keramik-Hybrid-Lagern näher erläutert. Es zeigt:
- Fig. 1: einen prinzipiellen Längsschnitt durch ein Flugtriebwerk mit einer Fehler-Erkennungsvorrichtung für ein Wälzlager gemäß dem Stand der Technik,
- Fig. 2: die Ansicht auf ein Keramik-Hybrid-Lager bei der Prüfung nur eines Teilbereiches des Umfangs der äußeren Lagerschale,
- Fig. 3: die Ansicht auf ein Keramik-Hybrid-Lager bei der Prüfung des gesamten Umfanges der äußeren Lagerschale und
- Fig. 4: die spezielle Anordnung der auslesenden Sensoren neben dem Keramik-Hybrid-Lager.

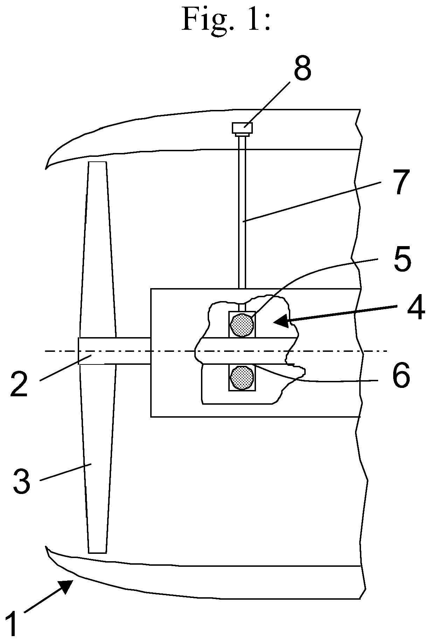

Die Fig. 1 zeigt in einem prinzipiellen Längsschnitt durch ein Flugtriebwerk eine Fehler-Erkennungsvorrichtung gemäß dem Stand der Technik. Dabei ist die im Triebwerksgehäuse 1 gelagerte Hauptantriebswelle 2 mit einem auf der Welle 2 gelagerten Fan 3 und einem auf der Welle 2 angeordneten Wälz-lager 4 mit Innenring 6 und Außenring 5 gezeigt. Der Außenring 5 ist über eine starre Strebe 7 mit einem im Triebwerksgehäuse 1 angeordneten Vibrationssensor 8 verbunden, der die Vibrationen des Wälzlagers 4 aufnehmen kann. Wegen der als Übertragungsglied wirkenden starren Strebe 7 besteht die Gefahr, dass eine Dämpfung und Verfälschung der höheren Frequenzen vom Lager 4 bis zum Vibrations-Sensor 8 auftritt.

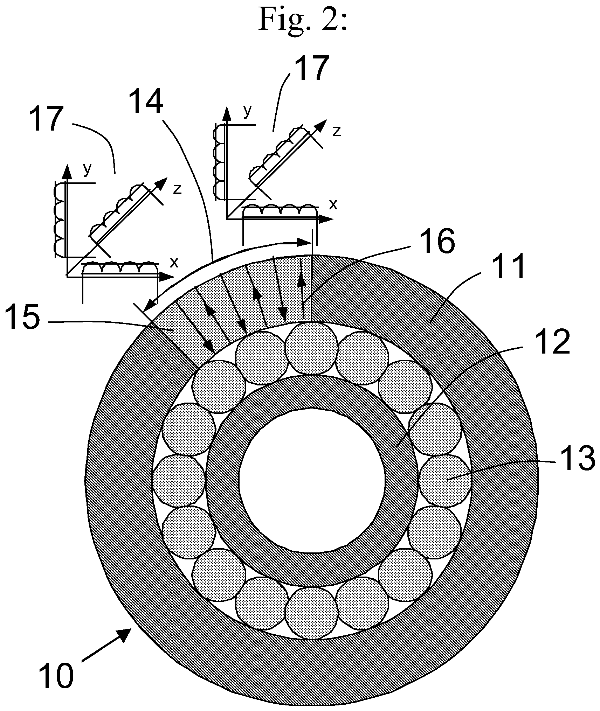

Das in Fig. 2 in Ansicht dargestellte Keramik-Hybrid-Lager 10 gemäß der Erfindung umfasst einen feststehenden Außenring 11, einen mit der Welle 2 drehenden Innenring 12 und dazwischen angeordnete, als Keramikkugeln 13 ausgebildete Keramikwälzkörper. Der Außenring 11 und der Innenring 12 bilden die Lagerschalen des Keramik-Hybrid-Lagers 10 und bestehen aus ferromagnetischem Werkstoff, insbesondere Eisen, Nickel, Kobalt und deren Legierungen. Das keramische Material der Keramikkugeln 13 ist sowohl nicht magnetisch als auch elektrisch nicht leitend. Das Keramik-Hybrid-Lager 10 findet unter anderem bei Flugtriebwerken Verwendung.

Ein Teilbereich 14 des Außenringes 11 aus ferromagnetischem Material wird bevorzugt vor dem Einbau des Lagers 10, z. B. in ein Flugtriebwerk mittels in den Außenring 11 eingebrachter, gegenläufiger magnetischer Strukturen 15 versehen. Dabei werden in den Bereich 14 magnetische Strukturen eingebracht, in denen alle Elementarmagneten jeweils abwechselnd in dieselbe, aber jeweils gegenläufige Richtung zeigen, wie es in Fig. 2 durch die Pfeile 16 dargestellt ist.

Auf der Außenseite des feststehenden, nicht drehenden Außenringes 11 sind Sensoren 17 angeordnet, die mit einer nicht näher dargestellten elektronischen Auswerteeinrichtung verbunden sind. Die Sensoren 17 messen das magnetische Feld H außerhalb des Außenringes 11 mittels der den Sensoren 17 zugeordneten, in den x-, y- und z-Achsrichtungen angeordneten Sensoren, wie es in Fig. 2 dargestellt ist. Die Anzahl und Anordnung der Sensoren 17 muss mit der Ausrichtung der einzelnen Magnetisierung der magnetischen Strukturen 15 harmonisieren, um bei einer Änderung des Druckes der Keramikkugeln 13 auf die Lauffläche des Außenringes 11 eine deutlich messbare Änderung im gemessenen magnetischen Feld H außerhalb des Außenringes 11 zu erreichen.

Der Teilbereich 14 des Umfanges des Außenringes 11 wird mittels der inversen Magnetostriktion ausgelesen, um die Druckverläufe zwischen den Keramikkugeln 13 und dem Außenring 11 zu ermitteln. Wenn nur eine einzelne Keramikkugel 13 geprüft werden soll, entspricht die Länge des sensitiven, gemessenen Teilbereiches 14 dem Umfang einer Keramikkugel 13. Durch den Druck der Keramikkugel 13 auf den Teilbereich 14 der Lauffläche des aus ferromagnetischem Werkstoff bestehenden Außenringes 11 kommt es aufgrund des inversen magnetostriktiven Effekts zu einer Veränderung des magnetischen Flusses im Außenring 11 des Keramik-Hybrid-Lagers 10, der mit verschiedenen bekannten Verfahren der Messung von Magnetfeldern gemessen werden kann. Die inverse Magnetostriktion führt zu einer Änderung der magnetischen Vorzugsrichtung durch mechanische Spannungen, hier hervorgerufen durch das Abrollen der Keramikkugeln 14 auf den Laufflächen des Aussenringes 11. Hier werden magnetfeldmessende Sensoren 17 verwendet. Es wird der inverse magnetostriktive Effekt für die Messung der Druckkraft ausgenutzt.

Sofern sich kritische Beschädigungen in der Keramikkugel 13 ausbilden, verändert sich auch der zeitliche oder räumliche Druckverlauf auf dem gemessenen Außenring 11 bzw. dem gemessenen Innenring 12 des Keramik-Hybrid-Lagers 10 und auch der magnetische Fluss weist einen veränderten Verlauf auf.

Ein Vergleich der magnetischen Flüsse vor und nach einem Vorfall liefert somit Aufschluss über mögliche Fehler in der gemessenen Keramikkugel 13 oder den Lagerschalen (Außen- bzw. Innenring 11, 12) der Lagerschalen.

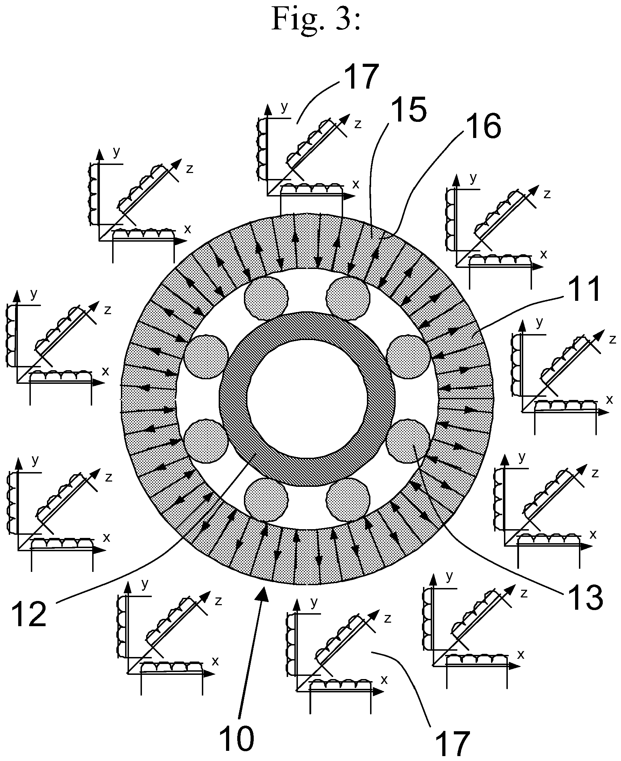

Das in Fig. 3 in Ansicht dargestellte Keramik-Hybrid-Lager 10 entspricht in seinem Aufbau dem Keramik-Hybrid-Lager 10 nach Fig. 2. Im Unterschied zum Erkennungsverfahren von Fehlern einzelner der Keramikkugeln 13 nach Fig. 2 wird hier der gesamte Ringumfang des Außenringes 11 über die inverse Magnetostriktion ausgelesen, um die Druckverläufe aller Keramikkugeln 13 zu überprüfen.

Hierzu sind am Umfang des Keramik-Hybrid-Lagers 10 mehrere, im Ausführungsbeispiel zehn Sensoren 17, um den Umfang verteilt angeordnet, die das magnetische Feld H außerhalb des Außenringes 11 messen. Die Anzahl und Anordnung der Sensoren 17 muss mit der eingebrachten Magnetisierung, hier der den gesamten Umfang des Außenringes 11 einnehmenden magnetischen Strukturen 15 gemäß den Pfeilen 16, harmonisieren, um bei einer Änderung des Druckes eine deutlich messbare Änderung im gemessenen magnetischen Feld H außerhalb des Außenringes 11 zu erreichen.

Die Sensoren 17 und die Magnetisierung können auch am Innenring 12 des Keramik-Hybrid-Lagers 10 angebracht sein. Jedoch sollte die jeweils drehende Lagerschale (Innen- oder Außenring 11, 12) des Lagers 10 nicht zur Messung verwendet werden, sondern nur der jeweils feststehende Innen- bzw. Außenring 11, 12.

Wie es bereits oben zur Fig. 3 beschrieben worden ist, erfolgt eine Erkennung von Fehlern aller Keramikkugeln 13 des Keramik-Hybrid-Lagers 10. Wenn der gesamte Umfang des Außenringes 11 des Keramik-Hybrid-Lagers 10 als messendes Element ausgelegt wird, können ebenfalls Beschädigungen an dem gesamten Außenring 11 bzw. der gesamten Lauffläche der Lagerschale erkannt werden.

Mit beiden Ausführungsformen des Verfahrens ist eine kontinuierliche Überprüfung der jeweils feststehenden Lagerschale des Außen- bzw. Innenrings 11 bzw. 12 und der Keramikkugeln 13 möglich, wobei zu berücksichtigen ist, dass bevorzugt jeweils nur die feststehende Lagerschale zur Durchführung des Verfahrens verwendet wird. Defekte Keramikkugeln 13 und Lagerschalen der Außen- oder Innenringe 11, 12 können somit schnell im Betrieb erkannt werden.

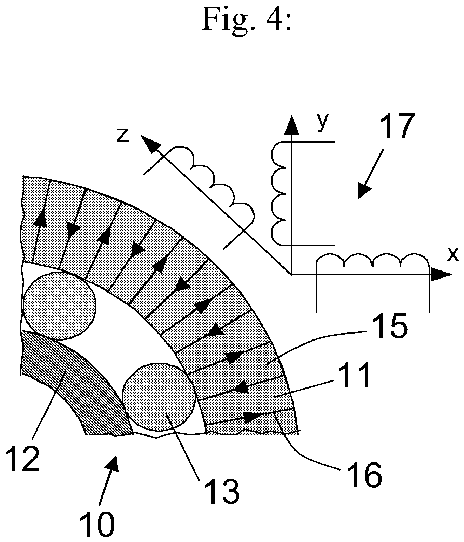

Die Fig. 4 zeigt die Anordnung eines neben dem Keramik-Hybrid-Lager 10 angeordneten Sensors 17 eines Lagerringes (Außenring 11), der gegenläufig ausgerichtete magnetische Strukturen 15 aufweist. Die Ausrichtung aller Sensoren 17 neben dem äußeren Lagerring 11 zu der internen magnetischen Struktur 15 wird so abgestimmt, dass bei einer Änderung des Druckverlaufs über die Änderung der magnetischen Vorzugsrichtung aufgrund der inversen Magnetostriktion eine optimale Signaländerung durch das Überrollen eines Sensors 17 durch einen Wälzkörper in Form einer Keramikkugel 13 erreicht werden kann.

### Bezugszeichenliste

- 1: Triebwerksgehäuse
- 2: Welle
- 3: Fan
- 4: Wälzlager
- 5: Außenring
- 6: Innenring
- 7: Strebe
- 8: Vibrationssensor
- 9: ---
- 10: Keramik-Hybrid-Lager
- 11: Außenring
- 12: Innenring
- 13: Keramikkugel
- 14: Teilbereich
- 15: magnetische Struktur
- 16: Pfeil
- 17: Sensor

## Patentansprüche

1. Verfahren zur Erkennung von Fehlern in den Laufflächen der Lagerschalen und in den Wälzkörpern von Keramik-Hybrid-Lagern, wobei die äußere oder innere ferromagnetische Lagerschale mit Außenring (11) bzw. Innenring (12) des Keramik-Hybrid-Lagers (10) mindestens in einem Teilbereich (14) magnetisch kodiert wird und wobei die magnetische Kodierung der Lagerschale mit Außenring (11) bzw. Innenring (12) als ein Generator für die Prüfung der Laufflächen der Lagerschalen mit Außenring (11) bzw. Innenring (12) und der Keramikwälzkörper, nämlich Keramikkugeln (13), mittels der inversen Magnetostriktion verwendet wird, **dadurch gekennzeichnet, dass** zwei oder mehrere, räumlich getrennte, gegeneinander laufende Magnetfelder, nämlich magnetische Strukturen (15), in dem Teilbereich der äußeren oder inneren ferromagnetischen Lagerschale ausgebildet werden, wobei mehrere Sensoren (17) außerhalb des Außenringes (11) die zwei oder mehreren Magnetfelder messen, wobei aus der Differenz der zwei oder mehreren Magnetfelder ein endgültiger Druckverlauf in mindestens einem Teilbereich der Laufflächen der Lagerschalen aufgrund eines ausgeübten Drucks mindestens eines Wälzkörpers auf den mindestens einen Teilbereich der Lagerschalen ermittelt wird, und wobei über einen Vergleich des endgültigen Druckverlaufs mit einem bekannten Druckverlauf eines geschädigten oder ungeschädigten Lagers ein Fehler erkannt wird.

2. Verfahren nach Anspruch 1, **dadurch gekennzeichnet, dass** die gesamte Lauffläche bzw. der volle Umfang der Lagerschale mit Außenring (11) bzw. Innenring (12) magnetisch kodiert wird.

3. Vorrichtung zur Erkennung von Fehlern in den Laufflächen der Lagerschalen und in den Wälzkörpern von Keramik-Hybrid-Lagern gemäß dem Verfahren nach Anspruch 1,
**dadurch gekennzeichnet,**
**dass** die äußere oder innere ferromagnetische Lagerschale mit Außenring (11) bzw. Innenring (12) des Keramik-Hybrid-Lagers (10) mindestens in einem Teilbereich (14) magnetisch kodiert ist und dass die magnetische Kodierung der Lagerschale mit Außenring (11) bzw. Innenring (12) als ein Generator für die Prüfung der Laufflächen der Lagerschalen mit Außenring (11) bzw. Innenring (12) und der Keramikwälzkörper, nämlich Keramikkugeln (13), mittels der inversen Magnetostriktion und der Messung des magnetischen Feldverlaufs in einer elektronischen Auswerteeinrichtung verwendet wird und wobei zwei oder mehrere, räumlich getrennte, gegeneinander laufende Magnetfelder, nämlich magnetische Strukturen (15), in dem Teilbereich der äußeren oder inneren ferromagnetischen Lagerschale ausgebildet werden, wobei mehrere Sensoren (17) außerhalb des Außenringes (11) angeordnet sind, die die zwei oder mehreren Magnetfelder messen, wobei aus der Differenz der zwei oder mehreren Magnetfelder ein endgültiger Druckverlauf in mindestens einem Teilbereich der Laufflächen der Lagerschalen aufgrund eines ausgeübten Drucks mindestens eines Wälzkörpers auf den mindestens einen Teilbereich der Lagerschalen ermittelt wird, und wobei über einen Vergleich des endgültigen Druckverlaufs mit einem bekannten Druckverlauf eines geschädigten oder ungeschädigten Lagers ein Fehler erkennbar ist.

4. Vorrichtung nach Anspruch 3, **dadurch gekennzeichnet, dass** die gesamte Lauffläche bzw. der volle Umfang der Lagerschale mit Außenring (11) bzw. Innenring (12) magnetisch kodiert ist.

5. Verwendung des Verfahrens gemäß Anspruch 1 oder 2 in einer Lagerung der Hauptantriebswelle eines Flugtriebwerks.

## Claims

1. Method for identifying defects in the running surfaces of the bearing shells and in the roller bodies of ceramic hybrid bearings, wherein the outer or inner ferromagnetic bearing shell with outer ring (11) or inner ring (12) of the ceramic hybrid bearing (10) is magnetically encoded at least in a subregion (14), and wherein the magnetic encoding of the bearing shell with outer ring (11) or inner ring (12) is used as a generator for checking the running surfaces of the bearing shells with outer ring (11) or inner ring (12) and the ceramic roller bodies, specifically ceramic balls (13), by means of inverse magnetostriction, **characterized in that** two or more spatially separated magnetic fields which oppose one another, specifically magnetic structures (15), are formed in the subregion of the outer or inner ferromagnetic bearing shell, wherein a plurality of sensors (17) outside the outer ring (11) measure the two or more magnetic fields, wherein a final pressure profile in at least one subregion of the running surfaces of the bearing shells owing to an exerted pressure of at least one roller body on the at least one subregion of the bearing shells is ascertained from the difference between the two or more magnetic fields, and wherein a defect is identified by means of a comparison of the final pressure profile with a known pressure profile of a damaged or undamaged bearing.

2. Method according to Claim 1, **characterized in that** the entire running surface or the entire circumference of the bearing shell with outer ring (11) or inner ring (12) is magnetically encoded.

3. Apparatus for identifying defects in the running surfaces of the bearing shells and in the roller bodies of ceramic hybrid bearings in line with the method according to Claim 1, **characterized in that** the outer or inner ferromagnetic bearing shell with outer ring (11) or inner ring (12) of the ceramic hybrid bearing (10) is magnetically encoded at least in a subregion (14), and **in that** the magnetic encoding of the bearing shell with outer ring (11) or inner ring (12) is used as a generator for checking the running surfaces of the bearing shells with outer ring (11) or inner ring (12) and the ceramic roller bodies, specifically ceramic balls (13), by means of inverse magnetostriction and measurement of the magnetic field profile in an electronic evaluation device, and wherein two or more spatially separated magnetic fields which oppose one another, specifically magnetic structures (15), are formed in the subregion of the outer or inner ferromagnetic bearing shell, wherein a plurality of sensors (17) are arranged outside the outer ring (11) and measure the two or more magnetic fields, wherein a final pressure profile in at least one subregion of the running surfaces of the bearing shells owing to an exerted pressure of at least one roller body on the at least one subregion of the bearing shells is ascertained from the difference between the two or more magnetic fields, and wherein a defect can be identified by means of a comparison of the final pressure profile with a known pressure profile of a damaged or undamaged bearing.

4. Apparatus according to Claim 3, **characterized in that** the entire running surface or the entire circumference of the bearing shell with outer ring (11) or inner ring (12) is magnetically encoded.

5. Use of the method according to Claim 1 or 2 in a bearing arrangement of the main drive shaft of an aircraft engine.

## Revendications

1. Procédé de reconnaissance d'anomalies dans les surfaces de roulement des coussinets et dans les éléments roulants de paliers hybrides-céramiques, dans lequel le coussinet ferromagnétique extérieur ou intérieur avec une bague extérieure (11) ou une bague intérieure (12) du palier hybride-céramique (10) est codé magnétiquement dans une région partielle (14) et dans lequel on utilise le codage magnétique du coussinet avec une bague extérieure (11) ou une bague intérieure (12) comme un générateur pour le contrôle des surfaces de roulement des coussinets avec une bague extérieure (11) ou une bague intérieure (12) et des éléments roulants en céramique, à savoir des billes de céramique (13), au moyen de la magnétostriction inverse,
**caractérisé en ce que** l'on forme deux ou plusieurs champs magnétiques spatialement séparés, se déplaçant l'un par rapport à l'autre, à savoir des structures magnétiques (15), dans la région partielle du coussinet ferromagnétique extérieur ou intérieur,
dans lequel plusieurs capteurs (17) mesurent à l'extérieur de la bague extérieure (11) les deux ou plusieurs champs magnétiques, dans lequel on détermine à partir de la différence des deux ou plusieurs champs magnétiques une allure de pression définitive dans au moins une région partielle des surfaces de roulement des coussinets en raison d'une pression exercée d'au moins un élément roulant sur ladite au moins une région partielle des coussinets, et dans lequel on reconnaît une anomalie par une comparaison de l'allure de pression définitive avec une allure de pression connue d'un palier endommagé ou non endommagé.

2. Procédé selon la revendication 1, **caractérisé en ce que** toute la surface de roulement ou toute la périphérie du coussinet avec une bague extérieure (11) ou une bague intérieure (12) est codée magnétiquement.

3. Dispositif de reconnaissance d'anomalies dans les surfaces de roulement des coussinets et dans les éléments roulants de paliers hybrides-céramiques par le procédé selon la revendication 1, **caractérisé en ce que** le coussinet ferromagnétique extérieur ou intérieur avec une bague extérieure (11) ou une bague intérieure (12) est codé magnétiquement au moins dans une région partielle (14) et **en ce que** l'on utilise le codage magnétique du coussinet avec une bague extérieure (11) ou une bague intérieure (12) comme un générateur pour le contrôle des surfaces de roulement des coussinets avec une bague extérieure (11) ou une bague intérieure (12) et des éléments roulants en céramique, à savoir des billes de céramique (13), au moyen de la magnétostriction inverse et de la mesure de l'allure du champ magnétique dans un dispositif d'évaluation électronique, et dans lequel on forme deux ou plusieurs champs magnétiques spatialement séparés, se déplaçant l'un par rapport à l'autre, à savoir des structures magnétiques (15), dans la région partielle du coussinet ferromagnétique extérieur ou intérieur, dans lequel plusieurs capteurs (17) sont disposés à l'extérieur de la bague extérieure (11) et mesurent les deux ou plusieurs champs magnétiques,
dans lequel on détermine à partir de la différence des deux ou plusieurs champs magnétiques une allure de pression définitive dans au moins une région partielle des surfaces de roulement des coussinets en raison d'une pression exercée d'au moins un élément roulant sur ladite au moins une région partielle des coussinets, et dans lequel une anomalie peut être reconnue par une comparaison de l'allure de pression définitive avec une allure de pression connue d'un palier endommagé ou non endommagé.

4. Dispositif selon la revendication 3, **caractérisé en ce que** toute la surface de roulement ou toute la périphérie du coussinet avec une bague extérieure (11) ou une bague intérieure (12) est codée magnétiquement.

5. Utilisation du procédé selon une revendication 1 ou 2 dans un support de l'arbre d'entraînement principal d'un moteur d'avion.
